# EUROPEAN PATENT APPLICATION

(11) **EP 0 823 310 A1**
(43) Date of publication of application: **11.02.1998**
(21) Application number: 96903250.7
(22) Date of filing: 27.02.1996
(51) Int. Cl.: B24B 53/00, B23Q 3/157

(54) **MACHINE TOOL FOR COMBINED WORKING**

(71) Applicant: KITAMURA MACHINERY CO., LTD., Takaoka-shi, Toyama-ken 939-11 (JP)
(72) Inventor: KITAMURA, Shozo,Kitamura Machinery Co., Ltd., Toyama-ken 939-11 (JP)
(74) Representative: Patentanwälte Ruff, Beier, Schöndorf und Mütschele
(86) International application number: JP9600447
(87) International publication number: WO9731756

(57) **Abstract**

Once a workpiece is set up, series of complex machining including a grinding can be taken and a grindstone is dressed or trued in a proper manner.

A tool head for holding a tool which is selected optionally from a group consisting of at least a drill, a turning-tool, and a grindstone, a feeding means for moving a workpiece relative to the tool, a dressing means, and a grindstone measuring means are provided. The dressing means and the grindstone measuring means are carried by the same feeding means. After the grindstone is attached as a tool on the tool head the dressing means is moved by the feeding means relative to the grindstone so as to come in touch therewith thereby the grindstone is dressed by the dressing means. And the grindstone measuring means is moved by the feeding means relative to the grindstone so as to come in touch therewith thereby the grindstone is measured by the grindstone measuring means.

## Description

### TECHNICAL FIELD

This invention relates to a machine tool for complex machining.

### BACKGROUND ART

A complex machining, in which a workpiece is first turned by a lather, then drilled, thereafter ground, is explained as an example of conventional complex machining procedure.

A workpiece is first set in a chuck of the lather for turning with a cutting tool engaging its circumference. Then the workpiece is detached from the lathe and reset on a drilling machine for drilling.

Thereafter the workpiece is detached from the drilling machine and reset on a grinding machine for grinding.

When the grinding is finished, the workpiece is detached from the grinding machine and reset on a three dimensional measuring device for probing the configuration thereof.

When a grindstone of the grinding machine is filled up, blinded, or abraded, it is dressed or trued by a dresser or a grindstone reforming machine. Then the size of the grindstone is remeasured.

Thus the workpiece is detached from the lathe and reset on the drilling machine, and again detached therefrom and reset on the grinding machine. It takes time to detach and reset the workpiece. It is hard to machine the workpiece with high accuracy.

The grindstone is also detached for dressing or truing. It takes time and is troublesome to detach and reset the grindstone.

In addition, it is not easy to acquire an exact diameter of the grindstone by dressing. This results in low accuracy of grinding.

### DISCLOSURE OF INVENTION

An object of this invention is to provide a machine tool for complex machining in which a workpiece once being set can be machined with high accuracy in various manners including a grinding, and in which a grindstone can be dressed and trued in correct manner.

The gist of the first invention is a machine tool for complex machining comprising a tool head for holding a tool which is selected optionally from a group consisting of at least a drill, a turning-tool, and a grindstone, a feeding means for moving a workpiece relative to the tool, a dressing means, and a grindstone measuring means, the dressing means and the grindstone measuring means being carried by the same feeding means, wherein after the grindstone is attached as a tool on the tool head the dressing means is moved by the feeding means relative to the grindstone so as to come in touch therewith thereby the grindstone is dressed by the dressing means, and wherein the grindstone measuring means is moved by the feeding means relative to the grindstone so as to come in touch therewith thereby the grindstone is measured by the grindstone measuring means.

The gist of the second invention is a machine tool for complex machining comprising:
a workpiece head (4) provided with a workpiece spindle (16) on which a workpiece can be detachably attached;
a tool head (5) provided with a tool spindle (42) on which can be detachably attached a tool which is selected optionally from a group consisting of at least a drill, a turning-tool, and a grindstone;
a machine tool main body (1) provided with a workpiece head and a tool head (5);
a first index part (6) for changing an axial direction of the tool spindle (42) of the tool head (5) relative to that of the workpiece spindle (16) of the workpiece head (4);
a first drive part (7) for continuously rotating the workpiece spindle (16) of the workpiece head (4) in a first direction (A);
a second index part (8) for indexing the workpiece spindle (16) of the workpiece head (4) in the first direction (A);
a first preventing part (9) for optionally preventing the workpiece spindle (16) of the workpiece head (4) from rotating;
a second drive part (10) for continuously rotating the tool spindle (42) of the tool head (5);
a second preventing means (11) for optionally preventing the tool spindle (42) of the tool head (5) from rotating;
drive systems (12, 13) located on the machine tool main body (1) for moving the workpiece head (4) and the tool head (5) relative to each other in a three dimensional manner;
a dressing means (302); and
a grindstone measuring means (303);
   wherein after the grindstone (343a) is attached as a tool on the tool head the dressing means (302) is moved by the drive systems (12, 13) relative to the grindstone (343a) so as to come in touch therewith thereby the grindstone (343a) is dressed by the dressing means (302), and wherein the grindstone measuring means (303) is moved by the drive systems (12, 13) relative to the grindstone (343a) so as to come in touch therewith thereby the grindstone (343a) is measured by the grindstone measuring means (303).

The gist of the third invention is a machine tool for complex machining comprising:
a complex machining means for grinding a cylindrical surface, a plane surface, or a hole of the workpiece by a grindstone axis attached on a tool spindle;
a dressing means for dressing the grindstone;
a grindstone measuring means for measuring a diameter of the grindstone;
a workpiece measuring means for measuring the workpiece after being ground; and
an automatic tool changer for attaching the workpiece measuring means to the tool spindle.

### BRIEF DESCRIPTION OF THE DRAWINGS

Fig. 1 is a perspective view showing a machine tool of a first embodiment of the invention.

Fig. 2 is a sectional view showing an interior construction of a workpiece head of the machine tool shown in Fig. 1.

Fig. 3 is a diagrammatical view showing a control system of the machine tool shown in Fig. 1.

Fig. 4 is a side view showing a tool holder and the peripheral members of the machine tool shown in Fig. 1.

Fig. 5 is a front view showing a turning-tool holder and the peripheral members of the machine tool shown in Fig. 1.

Fig. 6 is a view showing an example of a turning operation in the machine tool shown in Fig. 1.

Fig. 7 is a view showing another machining example.

Fig. 8 is a view showing a further machining example.

Fig. 9 is a view showing a machined workpiece.

Fig. 10 is a view showing another machined workpiece.

Fig. 11 is a view showing a further machined workpiece.

Fig. 12 is a view showing a further machined workpiece.

Fig. 13 is a view showing an automatic tool changing procedure in the machine tool shown in Fig. 1.

Fig. 14 is a side view showing the dressing means and the tool measuring means of the machine tool shown in Fig. 1.

Fig. 15 is a perspective partial view showing a flat grinding procedure in the machine tool shown in Fig. 1.

Fig. 16 is a partial plane view showing another flat grinding procedure different from that of Fig. 15.

Fig. 17 is a partial plane view showing a cylindrical grinding in the machine tool shown in Fig. 1.

Fig. 18 is a partial plan view showing a inside grinding in the machine tool shown in Fig. 1.

Fig. 19 is an axial sectional partial view showing a mechanism for preventing a tool spindle from rotating in a machine tool of the second embodiment of the invention.

Fig. 20 is a partial sectional view showing the tool spindle shown in Fig. 19.

Fig. 21 is a front view showing a machine tool for complex machining of a third embodiment of the invention.

Fig. 22 is a plane view showing the machine tool of Fig. 21.

### BEST MODE FOR CARRYING OUT THE INVENTION

A machine tool of an embodiment of the invention is explained.

### The machine tool comprises:

a complex machining means for grinding a cylindrical surface, a flat surface, or a hole of the workpiece with a grindstone shaft attached on a tool spindle;
a dressing means for dressing the grindstone;
a grindstone measuring means for measuring a diameter of the grindstone;
a workpiece measuring means for measuring the workpiece after being ground; and
an automatic tool changer for attaching the workpiece measuring means to the tool spindle.

The workpiece attached on the workpiece spindle is at least turned and ground by the complex machining means, and a plurality of tools selected from a group consisting of at least a turning-tool, a milling-tool, a drill, a tapping-tool, and a grindstone are attached sequentially on the tool spindle one by one so that a plurality of complex machining selected from a group consisting of turning, milling, drilling, tapping, and grinding are taken in a serial manner.

The grindstone is a tool for grinding. Conventional grindstones can be used as the grindstone. For example, a grindstone shaft, a flat grindstone, a grinding wheel, and various shaped grinding stone can be used.

The dressing means is a tool for dressing, or correcting the grindstone, for example dressing or trueing the grindstone. A conventional dresser, such as a diamond tool can be used as the dressing means.

The grindstone measuring means is a means for measuring a size of the grindstone by moving relative to the grindstone and coming in touch with it. A conventional touch sensor can be used as the grindstone measuring means.

The feed means is a means for moving the workpiece, the dressing means, and the grindstone measuring means relative to the tool, respectively. Each direction of the relative movement can be optionally selected. For index purpose the workpiece, the dressing means, and the grindstone measuring means can be moved, for example, in three axial directions relative to the tool, respectively, and the workpiece can be also moved about two rotary axes relative thereto. The dressing means and the grindstone measuring means can be moved about the rotary axes relative to each other for index.

As the tool can be used a grindstone, a turning-tool, a cutting-tool, a drill, a milling-tool, a tapping-tool, and so on.

When the grindstone is used as the tool, various kinds of grinding can be taken. Such as a cylindrical surface, a plane surface, and a hole surface can be ground.

When the turning-tool or the cutting-tool is used as the tool, a turning, a milling, a drilling, a tapping, and so on can be taken.

Therefore by using various kinds of tools, a turning, a milling, a drilling, a tapping, a grinding can be taken in series of complex machining.

A conventional automatic tool changer (ATC) can be used for changing the tool and the workpiece measuring means. The workpiece measuring means is a means for measuring a size or a configuration of the workpiece. A conventional touch sensor can be used as the workpiece measuring means. The workpiece and the touch sensor are moved relative to each other in such a manner that they come in touch with each other, thereby a size or a configuration of the workpiece can be measured.

Machine tools for complex machining of the first to the third embodiments of the invention are explained next, respectively.

### FIRST EMBODIMENT

A machine tool for complex machining according to the first embodiment of the invention is hereinafter described.

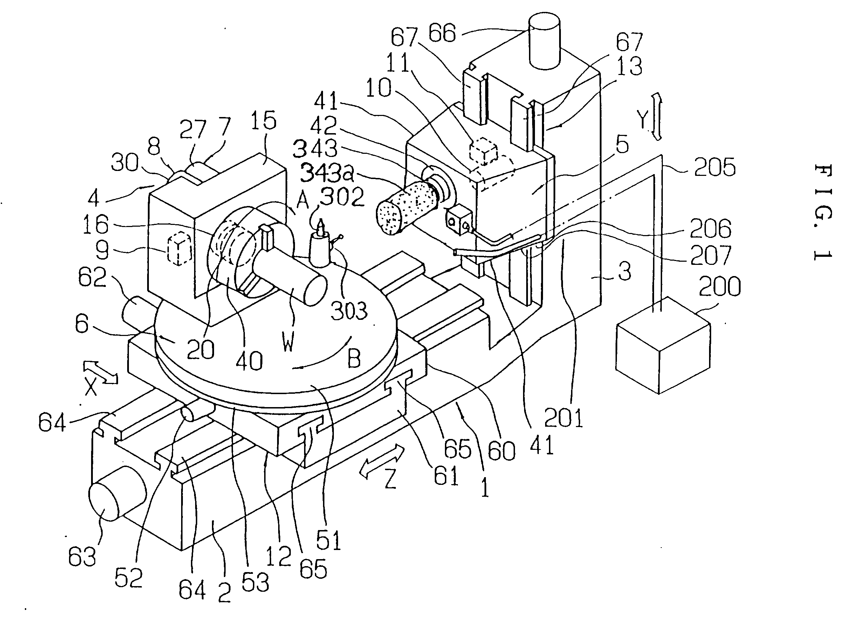

As shown in Fig. 1, the machine tool of the first embodiment comprises a means for complex machining, a CNC-device 100, a workpiece changer 101, a tool changer 102, a workpiece magazine 103, a tool magazine 104, a workpiece measuring means 301, a dressing means 302, and a grindstone measuring means 303.

The complex machining means comprises a machine tool body 1, a workpiece head 4, a tool head 5, a first index part 6, a first drive part 7, a second index part 8, a first preventing part 9, a second drive part 10, a first drive system 12, a second drive system 13, a cutting liquid tank 200, and a supplying device 201 for cutting liquid.

The first drive system 12 and the second drive system 13 form a drive means.

The machine tool body 1, the workpiece head 4, the tool head 5, the first index part 6, the second index part 8, and the drive means form a feed means.

The machine tool body 1 has a bed 2 and a column 3.

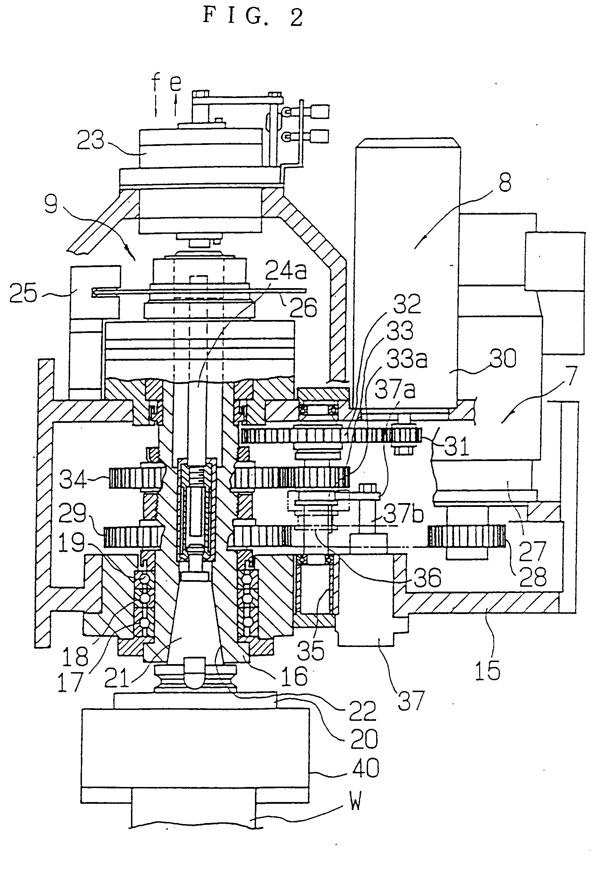

As shown in Fig. 1 and Fig. 2, the workpiece head 4 has a first casing 15, a workpiece spindle 16, bearings 17-19, a hydraulic device 23. The first casing 15 is provided with the first drive part 7, the second index part 8, and the first preventing part 9. The first casing 15 is also provided the workpiece spindle 16 rotatably supported by the bearings 17-19. On the workpiece spindle 16 a workpiece holder 20 is detachably attached by a conventional collet chuck. The workpiece holder 20 has a taper portion 21 of which configuration corresponds to a fitting hole 22 of the workpiece spindle 16.

A rod 24a of the hydraulic device 23 can be moved in an e-direction. The taper portion 21 of the workpiece holder 20 is inserted in the fitting hole 22 by this movement. When the rod 24a is moved in an f-direction, the taper portion 21 can be withdrawn from the fitting hole 22.

Near the other end of the workpiece spindle 16 the first preventing part 9 is located. The first preventing part 9 has a hydraulic break device 25 and a rotor 26. The hydraulic break device 25 is mounted on the first casing 15. The rotor 26 is secured on the other end of the workpiece spindle 16. The hydraulic device 25 is so actuated as to stop the rotation of the workpiece spindle 16 on request.

The first drive part 7 comprises a first rotary drive motor 27, a first gear 28, a second gear 29, and so forth. The first gear 28 is secured on an output shaft of the first rotary drive motor 27. The second gear 29 is secured on the workpiece spindle 16. Between the first and the second gears a driving force is transmitted via gears not shown in Figs. When the first rotary drive motor is driven, the workpiece spindle 16 is continuously rotated in a first direction A.

The second index part 8 comprises a first index motor 30, a third gear 31, a fourth gear 32, a fifth gear 33, a sixth gear 34, a slide mechanism 35, and a first shaft 36. The third gear 31 is secured to an output shaft of the first index motor 30. The fourth gear 32 is secured on the first shaft 36. The fourth gear 32 meshes with the third gear 32, while the fifth gear 33 meshes with the sixth gear 34. The workpiece spindle 16 can be indexed in the A-direction (see Fig. 1) by the first index motor 30, for instance by every 10 degrees or every 1 degree.

The fifth gear 33 is slidable only in the axial direction of the first shaft 36. A lever 37a of the slide mechanism 35 engages a portion 33a of the fifth gear 33, so that when a rod 37b is contracted the fifth gear 33 is slid toward the first shaft 36. Thereby the fifth gear 33 disengages the sixth gear 34. The driving force of the first index motor 30 is not transmitted to the workpiece spindle 16. This prevents the first index motor 30 from rotating when the workpiece spindle 16 is continuously rotated via the first rotary drive motor 27, thereby the first index motor 30 is protected. The first index motor 30 is, for instance, a servo motor.

The workpiece holder 20 shown in Fig. 2 has a conventional air chuck 40, on which a cylindrical workpiece W is attached.

The tool head 5 comprises a second casing and a tool spindle 42, as shown in Fig. 1. At the second casing 41 the second preventing part 11 and the second drive part 10 are mounted.

The tool spindle 42 is the same type as the workpiece spindle 16. At the tool spindle 42 a tool holder is detachably set by a conventional collet chuck.

The tool holder is a conventional one, such a grinding-tool holder which is described later, a turning-tool holder, and a cutting-tool holder, and so forth.

In Fig. 1, a grinding-tool holder 343 is detachably set as a tool holder. As described later, the grinding-tool holder can be replaced by another tool holder, such as a turning-tool holder.

The second drive part 10 comprises a motor (not shown) and gears (not shown) for continuously rotating the tool spindle 42.
The first index part 6, shown in Fig. 1, is mounted on a first saddle 60 of the first drive system 12. The first index part 6 comprises a rotary disc 51, a fixing disc 53, and a second index motor 52. On the rotary disc 51 the workpiece head 4 is secured. The rotary disc 51 can be indexed in a B-direction by means of the second index motor 52. This index mechanism is a conventional one.

The first drive system 12 and the second drive system 13 move the tool head 5 and the workpiece head 4 relative to each other.

The first drive system 12 comprises the first saddle 60, a second saddle 61, an X-axis motor 62, and a Z-axis motor 63. The second saddle 61 can be moved along a Z-axis guide 64 of the bed in a Z-direction by means of the Z-axis motor 62. The first saddle can be moved along an X-axis guide 65 in a X-direction by means of the X-axis motor 65.

The second drive system 13 comprises a Y-axis motor 66 and a Y-axis guide 67. The tool head 5 can be moved in a Y-direction by means of the Y-axis motor 66.

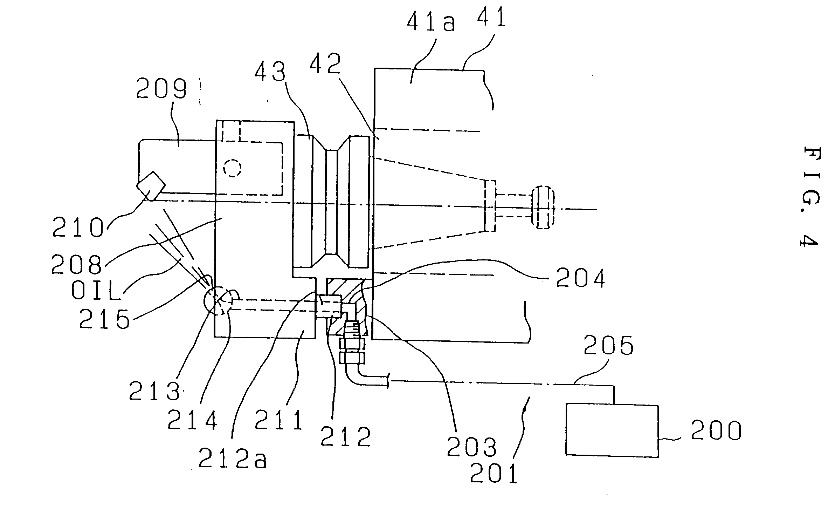

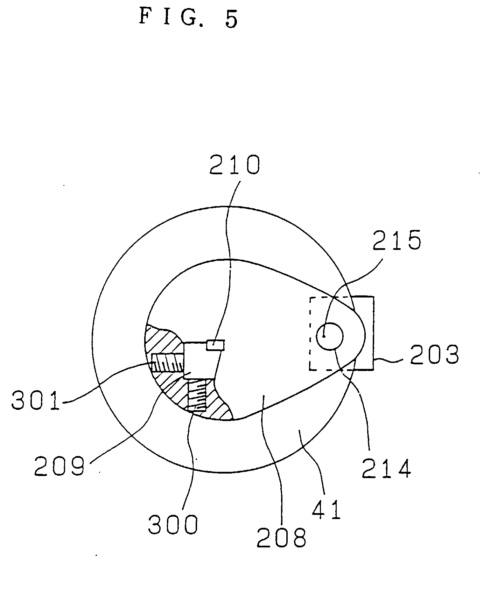

The turning-tool holder 43, a rotation preventing means, and the cutting tool supply device 201 are described hereinafter with reference to Fig. 4 and Fig. 5.

In Fig. 4 and Fig. 5, the grinding tool holder 343 is replaced by the turning-tool holder 43. The turning-tool holder 43 is attached on the tool spindle 42 by a conventional collet chuck.

The rotation preventing means comprises a fixing member 208, a rotation preventing member 212, and a positioning block 203.

The cutting oil supplying device 201 comprises a first cutting oil line 205, a second cutting oil line 206, and a spherical member 214.

The turning-tool holder 43, which may be called a bite holder as described above, is inserted in the tool spindle 42. The positioning block 203 is detachably mounted on an end cover 41a of the second casing 41. An L-shaped first conduit 204 is formed in the positioning block 203. To one end of the first conduit 204 a first cutting oil line 205 is connected at its one end. The other end of the first cutting oil line 205 is connected to a tank 200. On request another second cutting oil line 206 is arranged as shown in Fig. 1. A cutting oil discharge opening 207 is defiend at the one end of the second cutting oil line 206, while the tank 200 is connected at the other end thereof.

On the turning-tool holder 43 the fixing member 208 is secured. On the fixing member 208 a turning-tool 209 is secured by fixing screws 300, 301, as shown in Fig. 4 and Fig. 5. On the turning-tool 209 a tip 210 is mounted. A projecting portion 211 of the fixing member 208 has the rotation preventing member 212 projecting therefrom. The rotation preventing member 212 is formed in a pipe-shape.

A second conduit 212a is formed in the rotation preventing member 212. A third conduit 213 is formed in the fixing member 208. One end of the second conduit 212a of the rotation preventing member 212 is connected to the other end of the first conduit 204. The other end of the second conduit 212a of the rotation preventing member 212 and one end of the third conduit 213 of the fixing member 208 are connected to each other and define a channel for cutting oil.

The spherical member 214 is mounted outside the fixing member 208. A nozzle 215 of the spherical member 214 is connected to the other end of the third conduit 213. The spherical member 214 is rotatable relative to the fixing member 208 so that the discharge direction of a cutting oil (OIL) can be changed. A cutting oil (OIL) is directed toward the tip 210 in Fig. 4.

When the turning-tool holder 43 is inserted in the tool spindle 42, the rotation preventing member 212 is also inserted axially in the preventing member 212 and engaged therewith. Thereby the turning-tool holder 43 is prevented from rotating relative to the tool spindle 42, or the endcover 41a, or the second casing 41. The second conduit 212a of the rotation preventing member 212 is connected to the first conduit 204 of the positioning block 203.

The cutting oil tank 200 has a supply motor 200a for discharging a cutting oil from the nozzle 215 toward the tip 210 via the first cutting oil line 205, the first conduit 204, the second conduit 212a, and the third conduit 213.

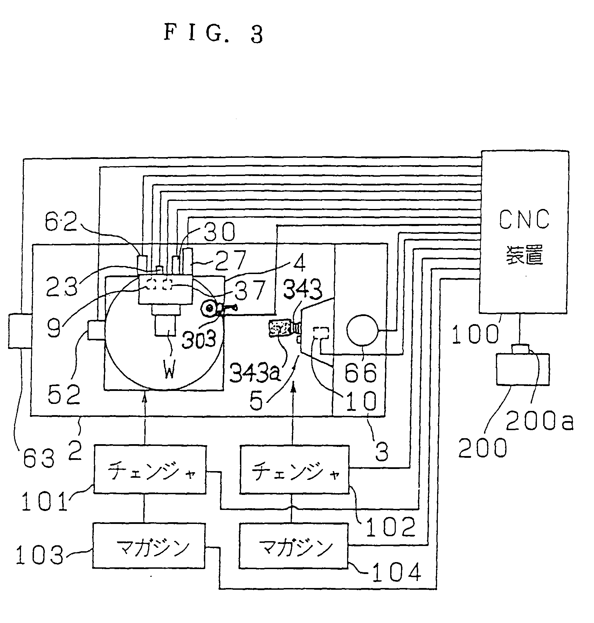

As shown in Fig. 3, the CNC-device 100 controls the following members.

As far as the workpiece head 4 is concerned, the first rotation preventing motor 27, the first index motor 30, the first preventing member 9, the hydraulic device 23, the X-axis motor 62, the Z-axis motor 63, and the second index motor 52 are controlled. And relating to the tool head 5, the second driving part 10 and the Y-axis motor 66 are controlled. The supply motor 200a of the cutting oil tank 200 is also controlled.

The workpiece changer 101 is to exchange the workpiece holder 20 attached on the workpiece head 4 for another workpiece holder. The tool changer 102 is to exchange the toll holder 43 for another tool holder. The tool changer 102 can be the same type as the workpiece changer 101.

The workpiece magazine 103 is to stock a plurality of workpiece holders. The tool magazine 104 is to stock a plurality of tool holders.

The tank 200 has the supply motor 200a for supplying a cutting oil to the first cutting oil line 205 or the second cutting oil line 206. The supply motor 200a is controlled by the CNC-device 100.

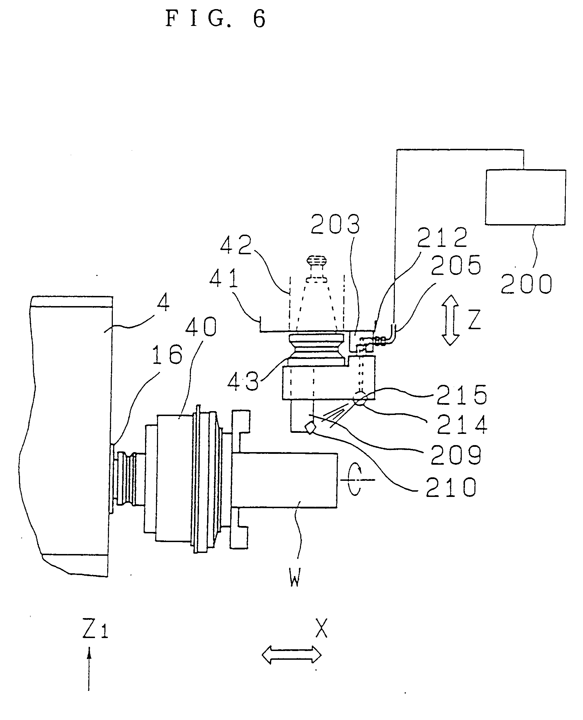

Next, how a workpiece W is machined in complex machining will be explained with reference to Figs. 6-8.

A cylindrical workpiece W is, as shown in Fig. 6, secured on the air chuck 40 of the workpiece holder 20 attached on the workpiece spindle 16 of the workpiece head 4. While the turning-tool 209 (it is called bite) is secured on the turning-tool holder 43 attached on the tool head 5.

The turning-tool holder 43 is attached on the tool spindle 42, andthe rotation preventing member 212 of the fixing member 208 engages the positioning block 203, thereby the tool 209 is positioned correctly in the circumferential position.

The workpiece spindle 16 is continuously rotated, and the workpiece head 4 is moved in the Z-direction, and a cutting oil contained in the tank 200 is discharged from the nozzle 215, thereby the circumference of the workpiece W is turned with the bite 209.

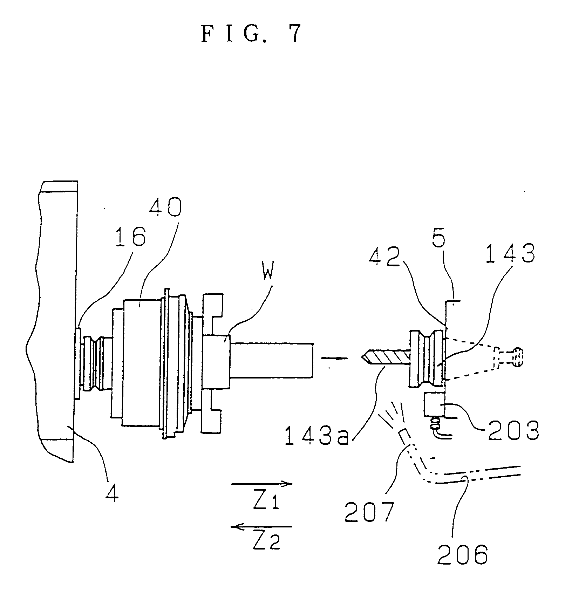

The turning-tool holder 43 shown in Fig. 6 is exchanged for another cutting-tool 143, as shown in Fig. 7. The cutting-tool holder 143 has a drill 143a. The drill 143a faces the workpiece W attached on the workpiece holder 40.

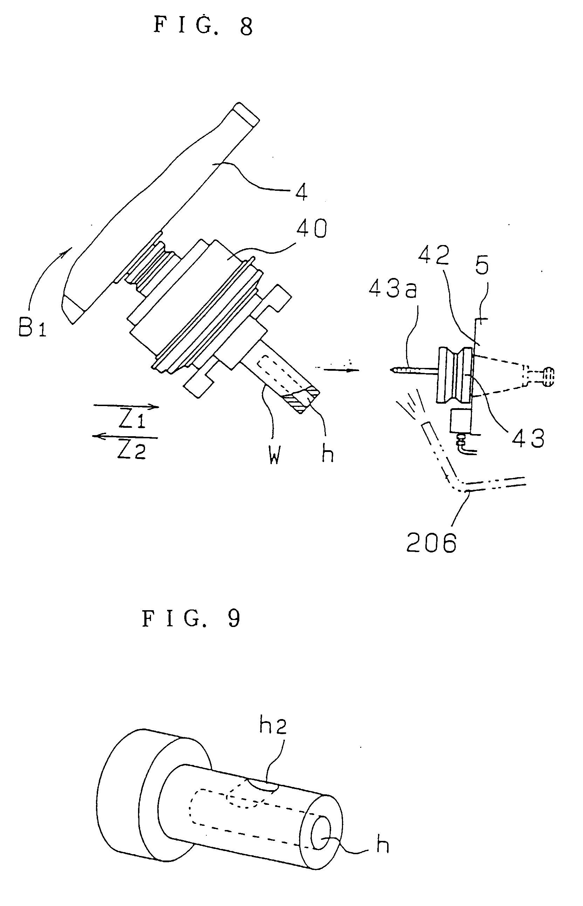

The workpiece spindle 16 is prevented from rotating, next the workpiece holder 4 is moved in a Z1-direction. Then the tool spindle 42 is continuously rotated. Thereby a hole h is bored axially on the workpiece W (see Fig. 9). A cutting oil is also supplied via the line 206.

The workpiece head 4 is returned in the Z2-direction in Fig. 7. Then the workpiece head 4 is indexed in the B1-direction and a hole h2 is bored as shown in Fig. 9. Two axial directions of the hole h1 and the hole h2 are crossed at a predetermined angle. A cutting oil is supplied via the second cutting oil line 206.

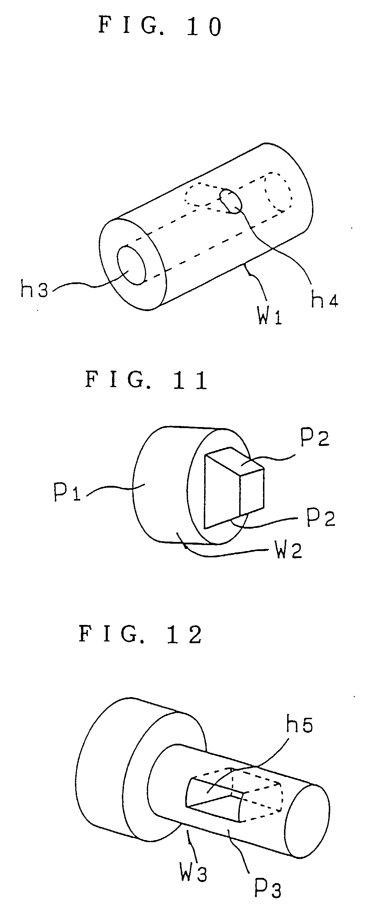

Next another example of the machining will be explained with reference to Figs. 10-12.

A work W1 shown in Fig. 10 has two holes. The axial direction of the hole h3 is perpendicular to that of the hole h4.

A workpiece W2 shown in Fig. 11 has a cylindrical portion P1 and a slope portion P2.

A workpiece W3 has a small diameter portion P3 on which a hole h5 is formed.

Next the dressing means 302 and the grindstone measuring means 303 are explained with reference to Fig. 1, Fig. 3, Fig 13, and Fig. 14.

The grindstone measuring means 303 is mounted on the rotary disc 51. The dressing means 302 is placed on the grindstone measuring means 303.

The dressing means 302 is formed by a member capable of dressing, for example a diamond dresser or other colon dressers. In shown embodiment the dressing means 302 is a diamond dresser having a diamond 302a at the end.

The grindstone measuring means 303 is formed by a means capable of measuring the size and the configuration of the grindstone, for example a touch sensor and other conventional measuring means. In shown embodiment the grindstone measuring means 303 is the touch sensor.

In grinding step a grinding oil is used on behalf of a cutting oil. A cutting oil and a grinding oil are stored, for example, separately in the tank 200, and one of which is selected to be supplied to the cutting oil supply device 201.

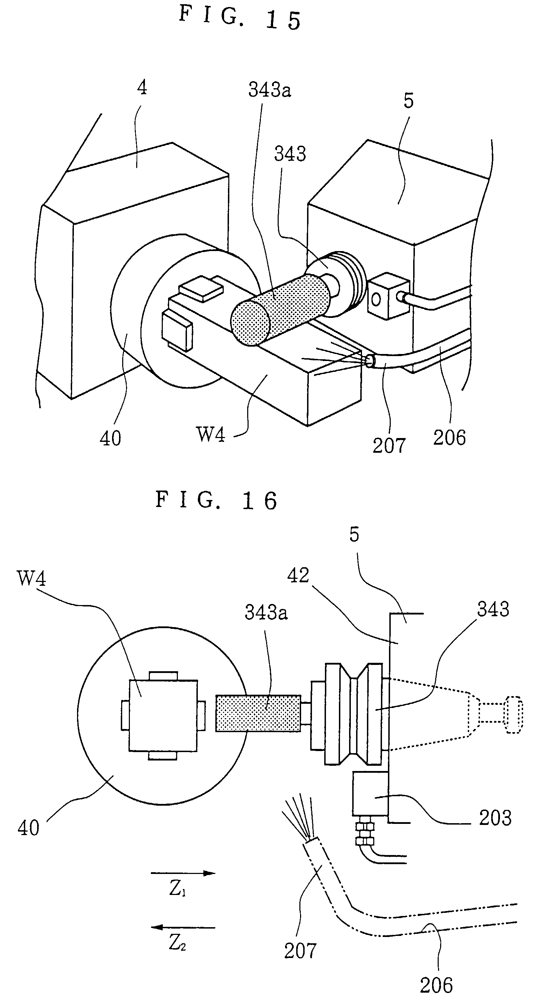

Next a surface grinding is explained with reference to Fig. 15.

First the workpiece spindle 16 is indexed and the tool spindle 42 is continuously rotated.

A grinding-tool holder 343 is inserted in the tool spindle 42. A grindstone 343a is attached on the grinding-tool holder 343. The grindstone 343a is a wheel spindle.

The workpiece holder 340 on which a rectangular parallelopiped workpiece W4 is attached is inserted in the workpiece spindle 16. The workpiece holder 340 is the same as the workpiece holder 40 shown in Fig. 1.

The workpiece head 4 and the tool head 5 is so moved in the X, Y, Z-directions relative to each other that the periphery of the grindstone comes in touch with the predetermined side surface of the workpiece W4. In this condition the grindstone 343a is moved in the X-direction so that the surface is ground. During this grinding a grinding oil is discharged from the cutting oil discharge portion 207 of the second cutting oil line 206. Thereby the grindstone is prevented from blinding and filling-up as little as possible, and, a heating and a resistance resulted from grinding are reduced, so that the finishing grade can be improved. As a grinding oil conventional one can be used.

During a grinding another grinding oil can be used on behalf of the cutting oil. A cutting oil and a grinding oil can be stored, for example, separately in the tank 200, one of which is optionally sent to the cutting oil supplying means.

Next another plane grinding will be explained with reference to Fig. 16.

The workpiece head 4 is so moved in the Z-direction from the position shown in Fig. 16 that the end face of the grindstone 343a comes in touch with the predetermined side face of the workpiece W4. In this condition, the workpiece head 4 and the tool head 5 are moved relative to each other in the X-direction or the Y-direction so that the workpiece is ground. Besides this procedure, it is the same as said surface grinding as shown in Fig. 15.

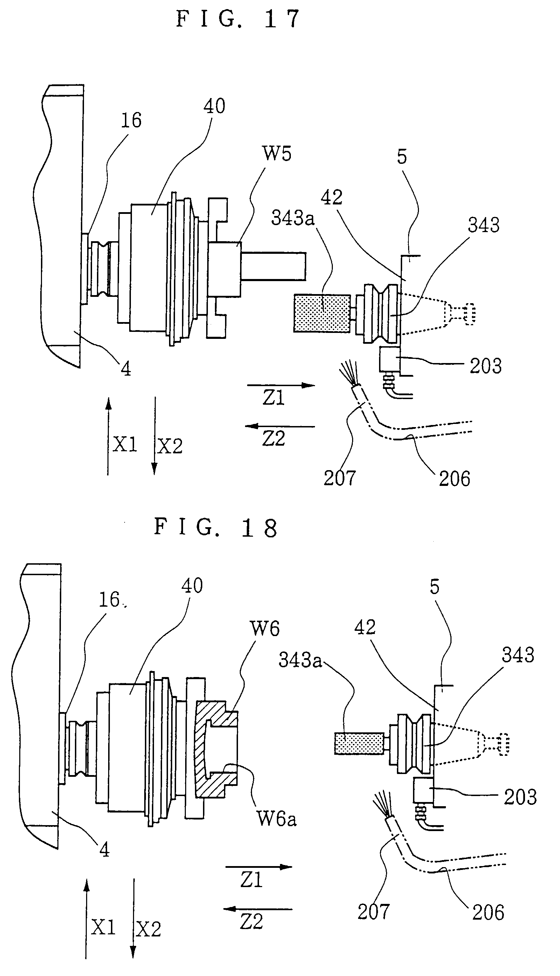

Next a cylindrical grinding will be explained with reference to Fig. 17.

At first the workpiece spindle 16 is continuously rotated, and the tool spindle 42 is also continuously rotated.

A workpiece holder 341 on which a cylindrical workpiece W5 is attached is inserted in the workpiece spindle 16. The axes of the workpiece spindle 16, the tool spindle 42, the workpiece W5, and the grindstone 343a are parallel to each other, and their Y-axes coincide with each other.

Then the workpiece head 4 is moved in the Z2-direction, next in the X1-direction so that the periphery of the grindstone 343a comes in touch with that of the workpiece W5. Thereby the workpiece is cylindrically ground. During this process a grinding oil is discharged from the cutting oil discharge portion 207 of the second cutting oil line 206 to the grinding stone 343a and the workpiece W5.

Next an inside grinding is explained with reference to Fig. 18.

At first the workpiece spindle 16 is continuously rotated, and the tool spindle 42 is also continuously rotated.

A workpiece holder 342 on which a workpiece W6 is held is attached in the workpiece spindle 16.

The workpiece is disc-shaped and has an axial hole 6Wa. The diameter of the hole W6a of the workpiece W6 is larger than that of the grindstone 343a. The axial directions of the workpiece spindle 16, the tool spindle 42, the hole W6a of the workpiece W6, and the grindstone 343a are parallel to each other. The grindstone 343a is located so as to be aligned with the hole W6a concerning about the Y-axis.

Then the workpiece head 4 is so moved in the Z1-direction, further in the X1 or the Y1-direction, that the outside surface of the grindstone comes in touch with the inside surface W6a of the workpiece W6. Thereby the workpiece is ground at its inside. During this process a grinding oil is discharged from the cutting oil discharge portion 207 of the second cutting oil line 206 to the grindstone 343a and the inside surface W6a of the workpiece W6.

According to this invention other grindings can be performed as well as before-said plane surface grinding, the cylindrical grinding, and the inside surface grinding.

Next a dressing or trueing for the grindstone 343a is explained.

At first a reforming means 300 is moved to its nominal position by the first drive system 12, and the tool head 5 is moved to a predetermined nominal position about the Y-axis by the second drive system 13. In a dressing or a trueing process these members are moved relative to each other by the first drive system 12 and the second drive system 13 on the basis of said nominal positions.

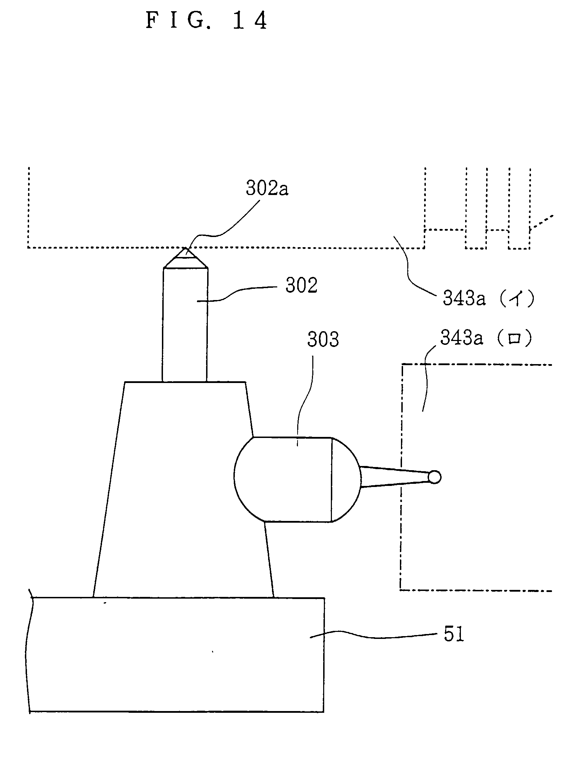

Then the tool spindle 42 is continuously rotated. Thereafter the dressing device 301 and the grindstone 343a are so moved relative to each other by the first drive system 12 and the second drive system 13 that a tip 302a of the dressing means 302 comes in touch with the grindstone 343a. Thereby a dressing or a trueing is performed. The grindstone in this condition is shown in Fig. 14 by a numeral of 343a( 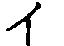 ).

An angle of the dressing means 302 relative to the grindstone 343a can be adjusted on request. The dressing means 302 can be inclined relative to a grinding surface of the grindstone 343a, for example, at a predetermined angle. Thus a biting or a streaking is prohibited.

Then the tip 302a of the dressing means 302 is removed from the grindstone 343a, and the tool spindle 42 is stopped. Thereafter the grindstone measuring means 303 and the grind stone 343a are so moved relative to each other that they come in touch with each other. The grindstone in this condition is shown by a numeral of 343a (□). Then it is so moved as to come in touch with the diametric opposite surface of the grindstone. Each touching point is measured by the grindstone measuring means. On the basis of the measured values, the diameter of the grindstone is estimated.

Three dimensional configuration of the grindstone 343a can be measured on request. This measuring technic is the same as the conventional touch sensor.

The measured values of the grindstone is transmitted to the CNC-device 100.

The grindstone 343a may be measured before a dressing or a trueing.

The CNC-device 100 can perform a dressing or a trueing in proper manner on the basis of the measured diameter values of the grindstone 343a.

The CNC-device 100 can control the relative movement of the workpiece head 4 and the tool head 5 on the basis of the measured diameter values of the grindstone 343a in each said grinding process. Therefore, even after a dressing or trueing, the grinding can be performed with the same accuracy as before.

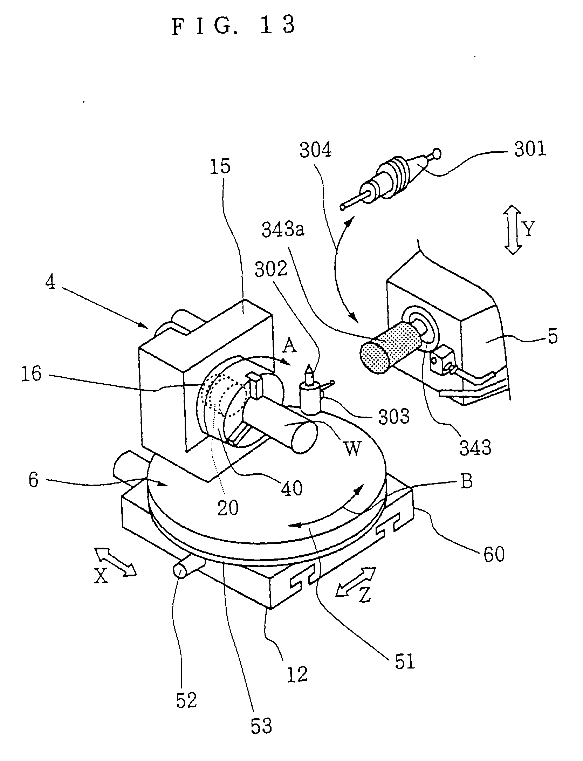

Next a process for measuring the configuration of a machined workpiece is explained with reference to Fig. 13.

After a machining process a workpiece measuring means 301 is attached in the tool spindle 42 on behalf of the workpiece holder 43 by an automatic tool changer (not shown and abbreviated as ATC). The workpiece measuring means 301 is detachably set in the tool spindle 42 in the same manner as the workpiece holder 343. An arrow 304 shows the changing of the workpiece measuring means 301 and the workpiece holder 43 in a typical manner. The ATC may be the same as the conventional one or above-said tool changer 102.

The workpiece measuring means 301 and the workpiece W are so moved relative to each other by the first drive system 12 and the second drive system 13 that they come in touch with each other, thereby the size or the configuration of the workpiece is measured. This measuring process is similar to that of the conventional touch sensor. Measuring results are transmitted to the CNC-device 100.

### SECOND EMBODIMENT

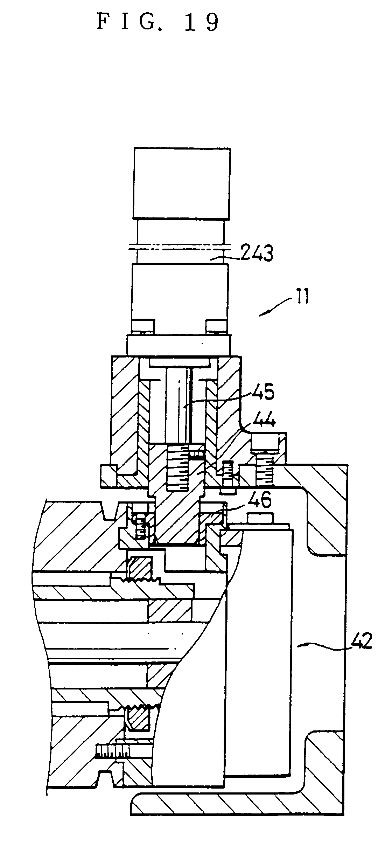

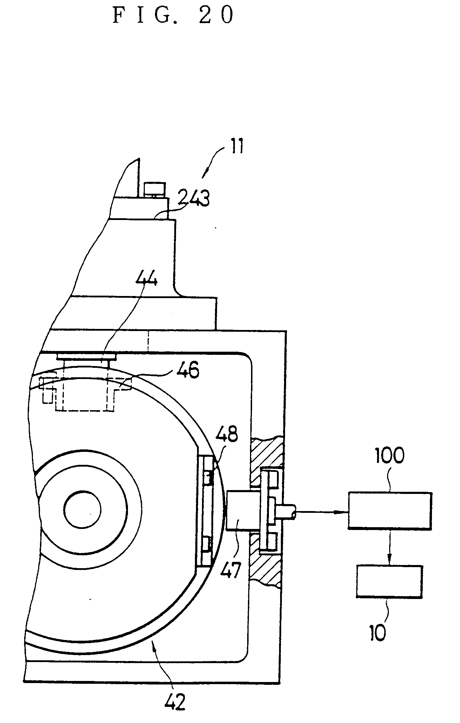

A machine tool for complex machining according to the second embodiment of the invention is explained with reference to Fig. 19 and Fig. 20.

The machine tool comprises a second preventing part 11 and a sensor 47. The tool spindle 42 is provided with a concave portion 46 and a sensing board 48. Other constructions are same as the first embodiment, and the same members are designated by the same numerals, respectively.

The second preventing part 11 has, as shown in Fig. 19 and Fig. 20, an air cylinder 243 and a rock member 44. The rock member 44 is attached on a rod 45 of the air cylinder 243. When the rod 45 is extended, the rock member 44 is engaged with the concave portion of the tool spindle 42. Thereby the tool spindle 42 is prevented from rotating, and the tool spindle 42 is indexed.

The sensor 47 shown in Fig. 20 is used for indexing the concave portion 46 and the rock member 44. When the sensor 47 detects the sensing board 48, the second drive part 10 is stopped for indexing the tool spindle 42 by an instruction from the CNC-device 100.

The second preventing portion 11 is controlled by the CNC-device 100.

When an index signal from the sensor 47 shown in Fig. 20 is transmitted to the CNC-device 100, the CNC-device 100 optionally stops the second drive part 10.

### THIRD EMBODIMENT

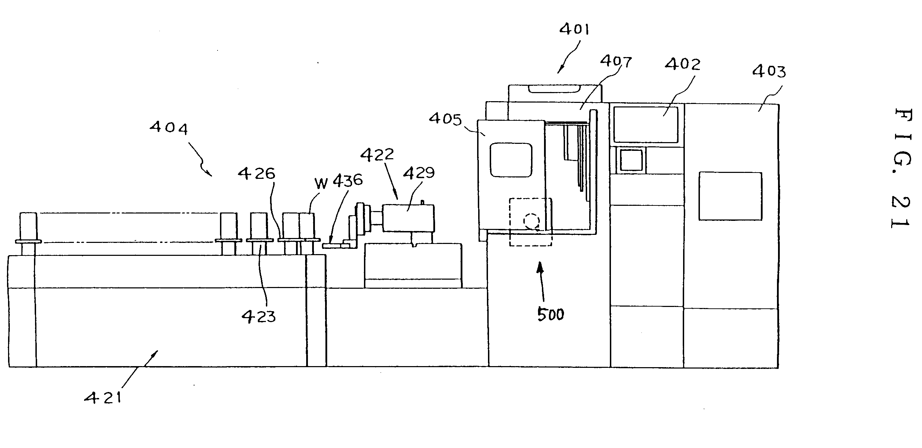

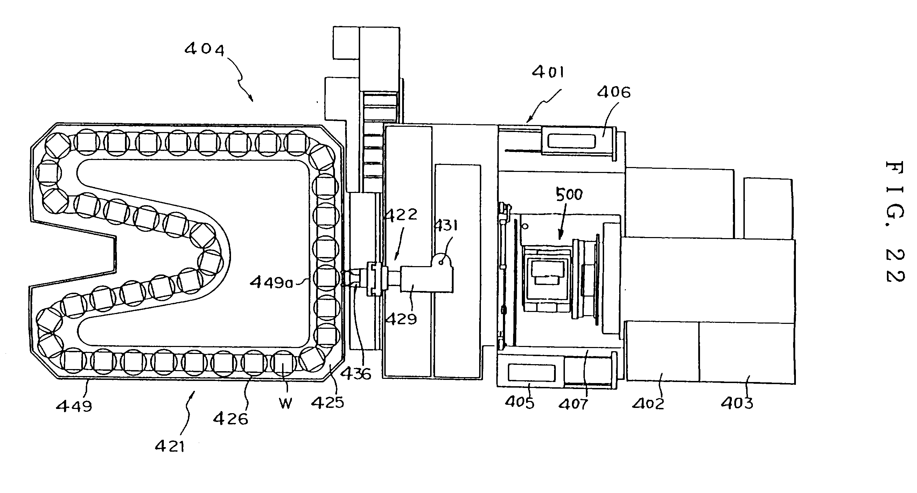

A machine tool for complex machining according to the third embodiment of the invention is explained with reference to Fig. 21 and Fig. 22. The machine tool is for a multi-plane machining, and is horizontal type machining center.

The machine tool 401 is provided with a control panel 402, a NC-device 403, a workpiece supply means 404, and a machine tool main body 500. The machine tool 401 is surrounded by a tip guard 407. The tip guard has doors 405, 406.

The machine tool main body 500 comprises the same complex machining means, the workpiece measuring means, the dressing means, and the grindstone measuring means as those of the first and the second embodiments. The machine tool main body 500 has also an automatic tool changer (not shown). The automatic tool changer is similar to the tool changer and the tool magazine of the first embodiment.

The NC-device 403 is the same as the CNC-device of the first embodiment.

Next the workpiece supply means 404 is explained. The workpiece supply means 404 comprises a workpiece station 421 and an automatic workpiece changer 422.

A plurality of workpiece holders 423 are placed on a conveyor 425 of the workpiece station 421. A workpiece W is attached on each workpiece holder 423. The workpiece holder 423 is the same as that of the first embodiment.

The workpiece supply means 404 is to load the workpiece W stored in the workpiece station 421 to the machine tool main body 500, one by one, and to unload the workpiece W from the machine tool main body 500 after machining.

The conveyer 425 of the workpiece station 421 is driven by a driving means (not shown). The conveyer 425 is rotated at such timings as instructed by a program of the NC-device 403. And each following operation of the automatic workpiece changer 422 is also instructed by a program of the NC-device 403.

The automatic workpiece changer 422 comprises a changer main body 429 and an arm 436. The changer main body 429 can be swiveled about a vertical support axis 431 within 180 degrees.

The arm 436 has such a shape as to hold the workpiece holder 423 in detachable manner.

Next the function of the automatic workpiece changer 422 is explained.

The automatic workpiece changer 422 holds with its arm 436 the workpiece holder 423 stored on the workpiece station 421, and withdraws it from the workpiece station 421. Then the changer main body 429 is swiveled in one direction within 180 degrees so that the arm 436 is moved to the machine tool main body 500 and the workpiece holder 23 is attached on the workpiece head of the machine tool main body 500. Then the changer main body 429 is swiveled in the other direction within 180 degrees so that the arm 436 is returned on the side of the workpiece station 421.

Thereafter the workpiece is ground, turned, drilled, and so on at the machine tool main body 500 in the similar manner to the first and the second embodiments.

After machining, the workpiece W is unloaded to the workpiece station 421 in following procedures.

As described before the arm 436 is returned on the side of the workpiece station 421. The changer main body 429 is turned in the one direction within 180 degrees. The arm 436 holds the workpiece holder 423 and withdraws it from the machine tool main body 500. Then the changer main body 429 is swiveled in the other direction within 180 degrees so that the arm 436 returns the workpiece holder 423 to the workpiece station 421.

In said precedure, one of workpieces W is loaded, machined, and unloaded.

Then a workpiece W to be machined next is moved on the conveyer 425 to the position facing the arm 436. Each workpiece W is loaded to the machine tool main body 500, machined, and thereafter unloaded therefrom to the workpiece station 421 in the afore-mentioned procedures.

### MODIFIED EMBODIMENT

The invention is not restricted to the afore-mentioned embodiments.

In the first embodiment, the dressing means 302 and the grindstone measuring means 303 can be attached on the other members rather than the rotary disc 51, for example on the workpiece head 4. In such a case, the dressing means and the grindstone measuring means can be indexed by the first index part 6. Thereby even if the grindstone has a complicated shape the dressing means and the grindstone measuring means can be come in touch with the grindstone at a proper angle.

In the embodiment shown in Fig. 6, the fixing member 208 is formed as a component of the turning-tool holder 43. And the second cutting oil line 206 can be omitted. In such a case, a cutting oil or a grinding oil can be supplied directly from the fixing member to the tool or the workpiece, for example in the machining processes shown in Fig. 8 and Fig. 7.

The tool head 5 shown in Fig. 1 can be formed so as to move in the X-direction or the Z-direction. In such a case, the workpiece head 4 does not have to move in the X-direction or the Z-direction. After the workpiece is turned, it can be tapped, milled, and so on by corresponding tools, as well as drilled.

According to this invention, once the workpiece is set up, a dressing and a trueing for grindstones as well as a series of complex machining which contains turning and etc. can be performed.

In addition, a grinding which is based on the size of the grindstone can be performed. Thereby, even after a dressing or a trueing, an accuracy of dressing can be the same as that of before.

Therefore according to the invention, comparing with such a case that the workpiece is to be set up several times, a complex machining and a dressing for grindstone can be performed at an improved accuracy. The handling and duration required for setting up can be also decreased.

## Claims

1. A machine tool for complex machining comprising a tool head for holding a tool which is selected optionally from a group consisting of at least a drill, a turning-tool, and a grindstone, a feeding means for moving a workpiece relative to the tool, a dressing means, and a grindstone measuring means, the dressing means and the grindstone measuring means being carried by the same feeding means, wherein after the grindstone is attached as a tool on the tool head the dressing means is moved by the feeding means relative to the grindstone so as to come in touch therewith thereby the grindstone is dressed by the dressing means, and wherein the grindstone measuring means is moved by the feeding means relative to the grindstone so as to come in touch therewith thereby the grindstone is measured by the grindstone measuring means.

2. A machine tool for complex machining comprising:
a workpiece head (4) provided with a workpiece spindle (16) on which a workpiece can be detachably attached;
a tool head (5) provided with a tool spindle (42) on which can be detachably attached a tool which is selected optionally from a group consisting of at least a drill, a turning-tool, and a grindstone;
a machine tool main body (1) provided with a workpiece head and a tool head (5);
a first index part (6) for changing an axial direction of the tool spindle (42) of the tool head (5) relative to that of the workpiece spindle (16) of the workpiece head (4);
a first drive part (7) for continuously rotating the workpiece spindle (16) of the workpiece head (4) in a first direction (A);
a second index part (8) for indexing the workpiece spindle (16) of the workpiece head (4) in the first direction (A);
a first preventing part (9) for optionally preventing the workpiece spindle (16) of the workpiece head (4) from rotating;
a second drive part (10) for continuously rotating the tool spindle (42) of the tool head (5);
a second preventing means (11) for optionally preventing the tool spindle (42) of the tool head (5) from rotating; drive systems (12, 13) located on the machine tool main body (1) for moving the workpiece head (4) and the tool head (5) relative to each other in a three dimensional manner;
a dressing means (302); and
a grindstone measuring means (303);
wherein after the grindstone (343a) is attached as a tool on the tool head the dressing means (302) is moved by the drive systems (12, 13) relative to the grindstone (343a) so as to come in touch therewith thereby the grindstone (343a) is dressed by the dressing means (302), and wherein the grindstone measuring means (303) is moved by the drive systems (12, 13) relative to the grindstone (343a) so as to come in touch therewith thereby the grindstone (343a) is measured by the grindstone measuring means (303).

3. A machine tool for complex machining comprising:
a complex machining means for grinding a cylindrical surface, a plane surface, or a hole of the workpiece by a grindstone axis attached on a tool spindle;
a dressing means for dressing the grindstone;
a grindstone measuring means for measuring a diameter of the grindstone;
a workpiece measuring means for measuring the workpiece after being ground; and
an automatic tool changer for transffering the workpiece measuring means to the tool spindle.

4. A machine tool for complex machining according to claim 3, wherein the workpiece attached on the workpiece spindle is at least turned and ground by the complex machining means, and wherein a plurality of tools selected from a group consisting of at least a turning-tool, a milling-tool, a drill, a tapping-tool, and a grindstone are attached sequentially to the tool spindle one by one so that a plurality of complex machining selected from a group consisting of a turning, a milling, a drilling, a tapping, and a grinding are taken in a serial manner.
